(19) Europäisches Patentamt
European Patent Office
Office européen des brevets

(11) **EP 3 335 021 B1**

(12) **FASCICULE DE BREVET EUROPEEN**

(45) Date de publication et mention de la délivrance du brevet:
**29.04.2020  Bulletin 2020/18**

(21) Numéro de dépôt: **16759689.9**

(22) Date de dépôt: **11.08.2016**

(51) Int Cl.:
*G01L 5/16* (2020.01)       *G01L 1/24* (2006.01)

(86) Numéro de dépôt international:
**PCT/EP2016/069186**

(87) Numéro de publication internationale:
**WO 2017/025616 (16.02.2017 Gazette 2017/07)**

(54) **CAPTEUR DE FORCE**

KRAFTSENSOR

FORCE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **13.08.2015  FR 1557723**

(43) Date de publication de la demande:
**20.06.2018  Bulletin 2018/25**

(73) Titulaires:
 • **Museum National d'Histoire Naturelle**
   **75005 Paris 5 (FR)**
 • **Centre National de la Recherche Scientifique**
   **75016 Paris (FR)**
 • **Sorbonne Université**
   **75006 Paris 6 (FR)**
 • **Université de Paris**
   **75006 Paris 6 (FR)**

(72) Inventeurs:
 • **TOUSSAINT, Séverine**
   **93100 Montreuil (FR)**
 • **LLAMOSI, Artémis**
   **93100 Montreuil (FR)**

(74) Mandataire: **IPAZ**
   **Parc Les Algorithmes, Bâtiment Platon**
   **CS 70003 Saint-Aubin**
   **91192 Gif-sur-Yvette Cedex (FR)**

(56) Documents cités:
| | |
|---|---|
| EP-A1- 1 321 753 | EP-A1- 1 757 917 |
| EP-A2- 2 392 904 | WO-A1-86/03618 |
| WO-A1-92/02796 | WO-A1-2005/029028 |
| WO-A1-2013/072712 | JP-A- H09 257 609 |
| US-A- 4 599 908 | US-A1- 2014 182 391 |
| US-B1- 7 903 907 | |

## Description

### Domaine technique

La présente invention concerne un capteur de force. Elle concerne aussi un procédé mis en œuvre par un tel capteur de force.

Un tel capteur permet de préférence à un utilisateur une mesure dynamique et spatialement résolue de l'intensité et de la direction de la force, de préférence même dans des conditions difficiles de mesure et selon de nombreuses formes de capteur possibles.

### Etat de la technique antérieure

On connaît des capteurs de force selon l'état de l'art.

Certains de ces capteurs sont mécaniques, et mesurent des forces par exemple par des systèmes de ressort. Un ressort permet de mesurer une intensité mais pas la direction d'une force, et n'a pas la réactivité satisfaisante pour des mesures dynamiques à 60Hz par exemple.

D'autres capteurs sont électroniques, et mesurent des forces par exemple via des effets capacitifs. Ce type de capteur craint l'humidité, et est fabriqué sous forme de plaque ou de film.

Le document WO 2005/029028 A1 décrit un capteur tactile optique. Ce capteur comprend plusieurs cellules, chaque cellule étant indépendante des autres cellules à l'extrémité d'un des doigts d'un gant. De, même les documents EP 1 757 917 A1 et EP 1 321 753 A1, avant des inventeurs en commun avec WO 2005/029028 A1, décrivent aussi un capteur tactile optique comparable.

Le document US 2014/182391 décrit un capteur de mesure de pression, avec une seule « grosse » cellule (« substrat flexible») comprenant plusieurs inclusions.

Le document JP H09 257609 A décrit un capteur tactile, avec une seule « grosse » cellule de matière « molle », comprenant plusieurs inclusions.

Le document WO 92/02796 A1 décrit un capteur de pression, avec une seule « grosse » cellule de matière « molle » (matière essentiellement élastique), comprenant plusieurs inclusions (fibre optique).

Le but de la présente invention est de proposer un capteur de force qui permet de résoudre au moins un des problèmes suivants :

- Permettre une mesure de force aussi bien en intensité qu'en direction, et/ou
- Mesurer des forces de manière spatialement résolue, c'est-à-dire donnant accès à la répartition spatiale des forces appliquées sur le capteur en plusieurs points de ce capteur, de préférence avec une résolution spatiale inférieure au centimètre, et/ou
- Permettre une mesure de force dynamique, et/ou
- Améliorer la robustesse de la technologie de mesure de force pour permettre au capteur de fonctionner dans des conditions difficiles (humidité, fort champ magnétique, etc...), et/ou
- Proposer une technologie de mesure de force qui permette une grande souplesse sur le choix de la forme du capteur, sans nécessairement devoir se limiter à une forme de « plaque » ou de « film ».

### Exposé de l'invention

Cet objectif est atteint avec un capteur de force selon l'invention, comprenant:

- une paroi comprenant une matrice de cellules de mesure, chaque cellule de mesure étant remplie d'un matériau de remplissage dans lequel est enrobée au moins une inclusion de matière,
- pour chaque cellule, au moins une source de lumière agencée pour illuminer l'au moins une inclusion enrobée dans cette cellule,
- pour chaque cellule, un système de mesure comprenant au moins un point de mesure optique agencé pour capter de la lumière en provenance de l'au moins une inclusion enrobée dans cette cellule,
- pour chaque cellule, des moyens agencés pour transformer des signaux optiques en provenance du système de mesure de cette cellule en un signal représentatif d'une force exercée sur cette cellule, ce signal dépendant d'un déplacement de l'au moins une inclusion enrobée au sein du matériau de remplissage de cette cellule.

Pour chaque cellule, le système de mesure associé à cette cellule peut comprendre au moins trois points de mesure optique distincts agencés pour capter de la lumière en provenance de l'au moins une inclusion enrobée dans cette cellule, de préférence au moins un (de préférence au moins trois) point(s) de mesure optique distinct par inclusion enrobée au sein du matériau de remplissage de cette cellule, l'au moins un (de préférence au moins trois) point(s) de mesure optique associé(s) à une inclusion donnée étant agencé(s) pour capter de la lumière en provenance de cette inclusion donnée.

Le capteur de force selon l'invention peut comprendre une matrice bidimensionnelle de cellules.

Le ou les points de mesure optique de chaque cellule sont de préférence distincts du ou des points de mesure de chacune des autres cellules.

Chaque point de mesure optique peut comprendre une extrémité distale d'une fibre optique de détection. Chaque fibre optique de détection peut comprendre :

- son extrémité distale orientée vers une cellule à laquelle elle est associée, et
- une extrémité proximale orientée vers un capteur optique agencé pour transformer en signal électrique un signal optique en provenance de cette fibre optique de détection, les moyens de transformation comprenant ledit capteur optique.

Le capteur de force selon l'invention peut comprendre au moins une source de lumière distincte par cellule, de préférence une source de lumière distincte par cellule ou une source de lumière distincte par inclusion dans cette cellule. Chaque source de lumière peut comprendre une extrémité distale d'une fibre optique d'illumination. Chaque fibre optique d'illumination peut comprendre :

- son extrémité distale orientée vers une cellule à laquelle elle est associée, et
- une extrémité proximale orientée vers des moyens de génération de lumière,
  lesdits moyens de génération de lumière étant commun pour l'ensemble des fibres optiques d'illumination.

Le capteur de force selon l'invention peut comprendre plusieurs cellules réparties dans une paroi, ladite paroi comprenant :

- une première face agencée pour l'exercice d'une ou plusieurs force(s) mesurée(s) par le capteur de force, et
- une deuxième face comprenant des passages pour l'insertion de l'extrémité distale de chaque fibre optique de détection et/ou d'illumination.

Le signal représentatif d'une force exercée sur une cellule peut comprendre une intensité de cette force et/ou une direction de cette force.

La ou l'au moins une des (ou de préférence chacune des) inclusion(s) enrobée(s) dans chaque cellule est de préférence un objet solide et/ou sphérique, de préférence une bille.

Pour chaque cellule :

- l'au moins une (de préférence chaque) inclusion enrobée dans cette cellule peut être fluorescente de manière à émettre un signal optique de fluorescence suite à une excitation à une longueur d'onde d'excitation émise par la ou les source(s) de lumière agencée(s) pour illuminer l'au moins une inclusion enrobée dans cette cellule, le signal de fluorescence ayant une longueur d'onde de fluorescence distincte de la longueur d'onde d'excitation,
- les moyens de transformation peuvent comprendre un filtre agencé pour filtrer la longueur d'onde d'excitation et laisser passer la longueur d'onde de fluorescence.

Les moyens de transformation peuvent comprendre un unique capteur optique pour l'ensemble des cellules, ledit capteur optique étant agencé pour transformer en signal électrique un signal optique en provenance de tout point de mesure optique de toute cellule.

Suivant encore un autre aspect de l'invention, il est proposé un procédé de mesure de force selon l'invention (de préférence mis en œuvre dans un capteur selon l'invention), comprenant :

- un exercice d'une force sur une paroi comprenant une matrice de cellules de mesure, la force pouvant varier d'une cellule à l'autre, chaque cellule de mesure étant remplie d'un matériau de remplissage dans lequel est enrobée au moins une inclusion de matière,
- pour chaque cellule, une illumination de l'au moins une inclusion enrobée dans cette cellule par au moins une source de lumière,
- pour chaque cellule, une captation de lumière en provenance de l'au moins une inclusion enrobée dans cette cellule par un système de mesure comprenant au moins un point de mesure optique,
- pour chaque cellule, une transformation, par des moyens de transformation, des signaux optiques en provenance du système de mesure de cette cellule en un signal représentatif d'une force exercée sur cette cellule, ce signal dépendant d'un déplacement de l'au moins une inclusion enrobée au sein du matériau de remplissage de cette cellule.

Selon l'invention:

- la transformation peut comprendre une transformation en signal électrique, par un capteur optique, d'un signal optique en provenance d'une fibre optique de détection (si ces fibres sont présentes) et/ou d'un point de mesure, et/ou
- une génération de lumière commune (par des moyens de génération) pour l'ensemble des extrémités proximales des fibres optiques d'illumination (si ces fibres sont présentes), et/ou
- l'exercice de la force est de préférence sur la première face de la paroi dans laquelle sont réparties les cellules, et/ou
- l'au moins une (de préférence chaque) inclusion enrobée dans toutes ou partie des cellules peut être fluorescente, de sorte que le procédé selon l'invention comprenne une émission d'un signal optique de fluorescence par l'au moins une (de préférence chaque) inclusion fluorescente suite à une excitation à une longueur d'onde d'excitation émise par la ou les source(s) de lumière agencée(s) pour illuminer l'au moins une inclusion enrobée dans cette cellule, le signal de fluorescence ayant une longueur d'onde de fluorescence distincte de la longueur d'onde d'excitation, et le procédé selon l'invention comprenant en outre un filtrage (typiquement par un filtre optique) de la longueur d'onde d'excitation de manière à supprimer la longueur d'onde d'excitation et laisser passer la longueur d'onde de fluorescence du signal optique en provenance du système de mesure de cette cellule.

**Description des figures et modes de réalisation**

D'autres avantages et particularités de l'invention apparaîtront à la lecture de la description détaillée de mises en œuvre et de modes de réalisation nullement limitatifs, et des dessins annexés suivants :

- les figures 1 et 2 illustrent deux variantes de la forme d'une matrice 12 bidimensionnelle de cellules 2 d'un premier mode de réalisation de capteur 1 de force selon l'invention,
- la figure 3 est une vue en perspective d'une cellule 2 du premier mode de réalisation de capteur 1 selon l'invention lorsqu'aucune force à mesurer n'est appliquée sur cette cellule 2,
- la figure 4 est une vue en perspective de la cellule 2 de la figure 3, lorsqu'une force 11 à mesurer est appliquée sur cette cellule 2
- la figure 5 est une vue de profil de la cellule 2 de la figure 3 lorsqu'aucune force à mesurer n'est appliquée sur cette cellule 2,
- la figure 6 est une vue de profil de la cellule 2 de la figure 3 lorsqu'une force 11 à mesurer est appliquée sur cette cellule 2,
- la figure 7 est une vue d'une première face 21 d'une paroi 20 dans laquelle est répartie la matrice bidimensionnelle 12 de cellules 2 du premier mode de réalisation de capteur 1 selon l'invention dans une variante plate à trente-six cellules 2, cette première face 21 étant agencée pour l'exercice d'une ou plusieurs force(s) mesurée(s) par le capteur 1 selon l'invention,
- la figure 8 est une vue d'une deuxième face 22 de la paroi 20 dans laquelle est répartie la matrice bidimensionnelle 12 de cellules 2 du premier mode de réalisation de capteur 1 selon l'invention dans la même variante plate à 36 cellules, cette deuxième face 22 comprenant des passages pour l'insertion de l'extrémité distale 13, 17 de fibres optiques de détection 14 et de fibres optiques d'illumination 18, et
- la figure 9 est une vue schématique d'ensemble des différentes composantes du premier mode de réalisation de capteur 1 selon l'invention.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

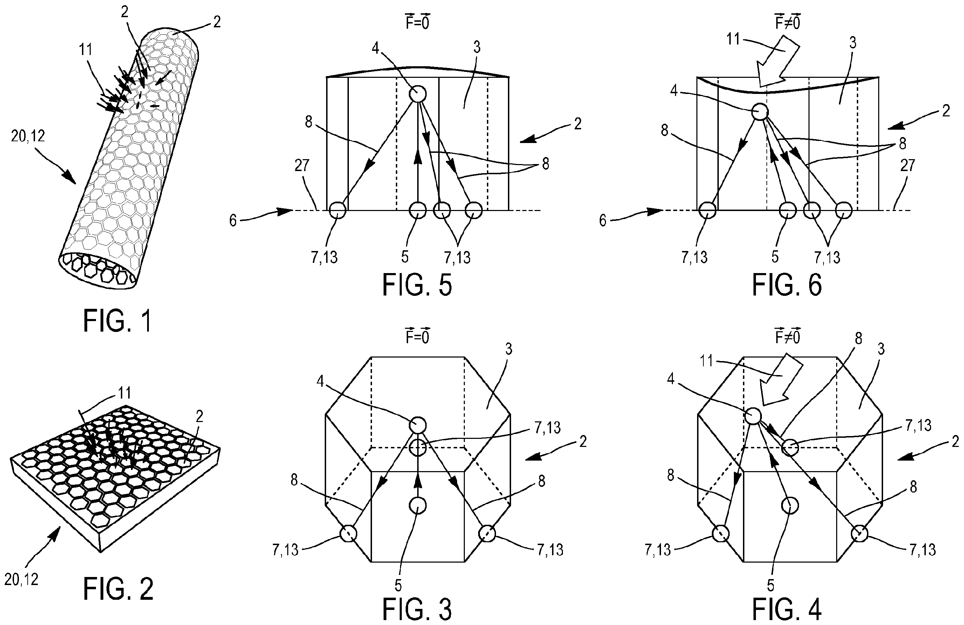

On va tout d'abord décrire, en référence aux figures 1 à 9, un premier mode de réalisation de capteur 1 selon l'invention.

Le capteur 1 est un capteur de force.

Le principe de premier mode de réalisation de capteur 1 repose sur un ensemble de cellules 2 remplies d'un polymère élastique 3 dont la déformation mesurable est proportionnelle à la force appliquée 11. Afin de mesurer la déformation de ce matériau 3, la position d'une inclusion 4 inclue dans le matériau 3 est déterminée par « triangulation » grâce à un système optique.

Le capteur 1 comprend au moins une cellule de mesure 2. Le capteur 1 comprend plusieurs cellules 2.

Le capteur 1 comprend une matrice bidimensionnelle 12 de cellules.

Sur une surface 21 de répartition de la matrice bidimensionnelle 12 de cellules 2, des cellules 2 sont de forme hexagonale et sont en contact de six autres cellules 2 voisines.

Cette matrice bidimensionnelle 12 et la paroi 20 dans laquelle cette matrice 12 est répartie n'a pas nécessairement une forme plane, mais peu avoir une forme de cylindre, de boule, etc... En effet, une telle paroi 20 comprenant une matrice 12 (hexagonale ou autre) de cellules 2 à remplir de matériau de remplissage 3 (typiquement un polymère élastique) peut facilement être fabriquée par impression 3D selon une forme quelconque.

La matrice 12 est réalisée par impression 3D stéréolithographique (ou impression tridimensionnelle) ou par usinage.

La matrice 12 est réalisée en polymère, en plastique ou en métal.

Par exemple, la matrice 12 est réalisée par impression 3D stéréolithographique en polymère, par exemple en Polymère d'Acide Lactique (ou « PLA »), typiquement avec une résolution de $25\mu$m. Dans une autre variante, la matrice 12 peut aussi être réalisée en métal, par exemple par Machine-outil à commande numérique (ou « CNC »).

La paroi 20 comprend ou forme la matrice 12 de différentes cellules 2 qui sont solidaires.

Il n'y a pas d'espace entre différentes cellules voisines 2 de la matrice 12.

On a donc la paroi 20 ou matrice 12 faite d'un matériau différent du matériau de remplissage 3 de chaque cellule 2 :

- soit des matériaux complément différents,
- soit des matériaux comprenant une même base mais modifiés de deux manières différentes,

de sorte que ces deux matériaux ont des propriétés mécaniques (par exemple élasticité, souplesse ou déformabilité) et/ou optiques (par exemple opacité) différentes.

Par exemple, la matrice 12 peut être elle aussi souple ou déformable, mais plus opaque que le matériau de remplissage 3.

Une matrice 12 de cellules 2 permet d'améliorer la précision de mesure en isolant (optiquement et/ou mécaniquement) différentes unités spatiales de mesure (les inclusions 4) les unes des autres, et peut mécaniquement améliorer la répartition des forces résiduelles et collatérales.

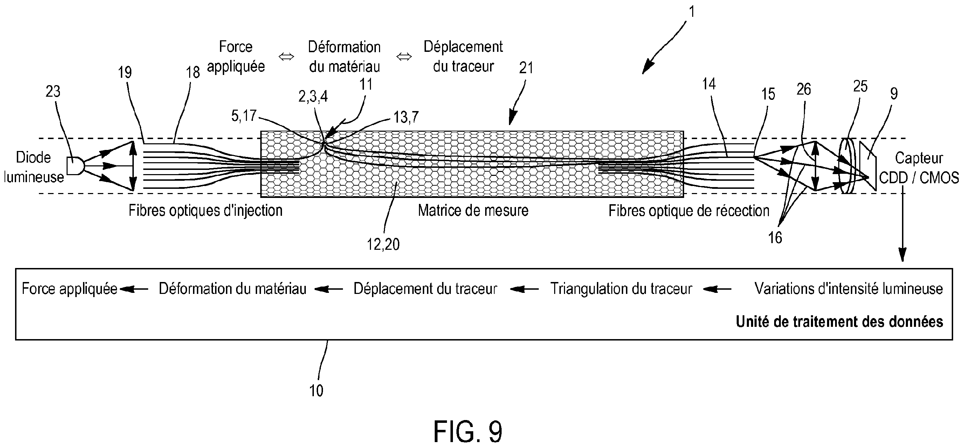

Comme illustré sur les figures 1 et 9, une forme cylindrique est préférée, notamment pour l'étude de forces de préhension d'humains ou d'animaux.

On a par exemple des variantes pour lesquelles la matrice 12 a une forme cylindrique avec les caractéristiques suivantes :

- Diamètre extérieur : 4 cm ; Longueur : 30 cm ; Nombre de cellules : 2156 (28x77) ; Nombre de fibres optiques (total) 8624 ; ou
- Diamètre extérieur : 2 cm ; Longueur : 13 cm ; Nombre de cellules : 476 (14x34) ; Nombre de fibres optiques (total) 1904.

Chaque cellule de mesure 2 est remplie d'un matériau de remplissage 3 dans lequel est enrobée une inclusion 4 de matière.

Chaque cellule a un diamètre inférieur à 5 millimètres, c'est-à-dire que tout le matériau de remplissage 3 d'une cellule 2 tient intégralement enfermé dans une zone délimitée par une sphère de 5 mm de diamètre.

Chaque cellule 2 est une cellule hexagonale de 4 mm de diamètre et 0,5 mm d'entretoise et de profondeur de 3 mm et 1,5 mm de plancher.

Le matériau de remplissage 3 est un matériau élastique, de préférence dont la déformation est linéairement proportionnelle à une force 11 appliquée comprise typiquement entre 0,1 et 40 Newtons.

Le matériau de remplissage 3 est un polymère.

Le polymère 3 utilisé est un polymère siliconé, du polydiméthylsiloxane (ou « PDMS », typiquement de référence Sylgard 184) dont les propriétés mécaniques ont été caractérisées (« Mechanical characterization of bulk Sylgard184 for microfluidics and microengineering », I D Johnston, D K McCluskey, C K L Tan and M C Tracey, Journal of Micromechanics and Microengineering, 2014).

L'inclusion de matière 4 peut être un objet solide ou autre (liquide, gazeux, etc.) comme par exemple une tache d'encre limitée dans une zone au cœur du matériau de remplissage 3 ou une bulle de gaz, voire une différence de propriété optique locale au sein du matériau de remplissage 3

Dans le premier mode de réalisation de capteur 1 illustré, l'inclusion 4 enrobée dans chaque cellule 2 est un objet solide, plus précisément une bille sphérique réfléchissante, typiquement une bille en polystyrène blanc.

Chaque bille réfléchissante 4, servant de marqueur de position, a un diamètre compris entre 250 et 300 $\mu$m et est coulée dans le matériau 3 de sa cellule 2 à environ un millimètre sous la surface de mesure 21.

L'inclusion de matière 4 à des propriétés optiques différentes de celles du matériau de remplissage 3. En particulier, l'inclusion de matière 4 à un indice de réfraction de la lumière (à une longueur d'onde d'excitation) différent de l'indice de réfraction (à cette même longueur d'onde d'excitation) du matériau de remplissage 3.

L'inclusion de matière est agencée pour envoyer de la lumière 8, c'est à dire pour :

- réfléchir de la lumière à la longueur d'onde d'excitation, et/ou
- diffuser de la lumière à la longueur d'onde d'excitation, et/ou
- émettre de la lumière (par exemple un signal de fluorescence) en réponse à la réception de lumière à la longueur d'onde d'excitation.

Pour chaque cellule 2, le capteur 1 comprend au moins une source de lumière 5 agencée pour illuminer l'inclusion 4 enrobée dans cette cellule 2.

Pour chaque cellule 2, le capteur 1 comprend un système de mesure 6 comprenant au moins un point de mesure optique 7 agencé pour capter de la lumière 8 (réfléchie, diffusée, de fluorescence, etc.) en provenance de l'inclusion 4 enrobée dans cette cellule 2.

Plus exactement, dans le capteur 1, le système de mesure 6 de chaque cellule 2 comprend au moins trois points de mesure optique distincts agencés pour capter de la lumière 8 (réfléchie, diffusée, de fluorescence, etc.) en provenance de l'inclusion 4 enrobée dans cette cellule 2.

On a donc au moins un point de mesure 7 distinct par cellule 2, et même au moins trois points de mesure 7 distincts par cellule 2.

Chaque point de mesure optique 7 d'une cellule 2 est distinct de tous les points de mesure des autres cellules.

Chaque point de mesure optique comprend, et même consiste en, une extrémité distale 13 (quasi ponctuelle) d'une fibre optique 14 de détection.

Il y a au moins une fibre optique 14 (et donc au moins une extrémité distale 13 de fibre 14) distincte par cellule 2, et même au moins trois fibres optiques 14 (et donc au moins trois extrémités distales 13 de fibre 14) distinctes par cellule 2.

Chaque fibre optique de détection 14 comprend :

- son extrémité distale 13 orientée vers (et même éventuellement insérée dans) une cellule 2 à laquelle elle est associée, et
- une extrémité proximale 15 orientée vers un capteur 9 optique agencé pour transformer en signal électrique un signal optique 16 (correspondant à la lumière 8 reçue à l'extrémité distale 13 de cette fibre 14) en provenance de cette fibre optique de détection 14, les moyens de transformation comprenant ledit capteur optique 9.

Le capteur optique nu 9 est conjugué par une simple lentille convergente 26 (de focale f=25.4 mm) aux extrémités proximales 15 des fibres 14.

Le capteur 1 étant basé sur une technologie optique, elle peut avoir une dynamique d'acquisition très rapide (par rapport à un ressort), typiquement de 60 Hz ou plus. La vitesse de la lumière n'est clairement pas un facteur limitant. Le principal facteur limitant est le modèle de capteur 9 utilisé. On peut par exemple utiliser un capteur 9 de référence IMX174 de marque SONY.

Le capteur 1 comprend une source de lumière 5 distincte par cellule, chaque source 5 étant agencée pour illuminer la cellule 2 à laquelle elle est associée sans illuminer les autres cellules 2.

Chaque source 5 de lumière comprend, et même consiste en, une extrémité distale 17 d'une fibre optique 18 d'illumination.

Chaque fibre optique d'illumination 18 comprend :

- son extrémité distale 17 orientée vers une cellule 2 à laquelle elle est associée ; cette extrémité distale est plus précisément placée de manière centrée au fond de la cellule à laquelle elle est associée, et
- une extrémité proximale 19 orientée vers des moyens 23 de génération de lumière,

lesdits moyens 23 de génération de lumière étant commun pour l'ensemble des fibres optiques d'illumination 18.

Les moyens de génération 23 comprennent une diode électroluminescente (ou « DEL ») par exemple verte de 20mA.

Ainsi, pour ce qui est de l'illumination, on utilise une diode électroluminescente 23 unique qui est amenée par des fibres 18 à chaque cellule 2 (typiquement pour l'illumination « par le bas » de la bille 4 de chaque cellule 2).

Il y a une fibre optique 18 (et donc une extrémité distale 17 de fibre 18) distincte par cellule 2.

Chaque fibre optique 14, 18 a un cœur en plastique par exemple de 240µm de diamètre et a un diamètre final de 250µm. Toutefois, des fibres 14, 18 en verre sont aussi envisageables.

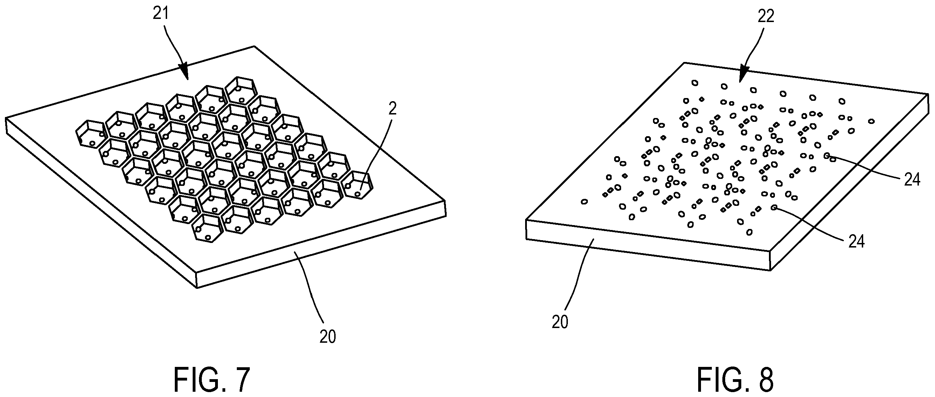

En référence aux figures 7 et 8, on remarque que le capteur 1 comprend plusieurs cellules 2 réparties dans la paroi 20 et que la paroi 20 comprend :

- une première face 21 agencée pour l'exercice d'une ou plusieurs force(s) mesurée(s) par le capteur 1, et
- une deuxième face 22 (opposée à la première face 21) comprenant des passages 24 (ou trous) pour l'insertion de l'extrémité distale 13, 17 de chaque fibre optique de détection 14 et de chaque fibre optique d'illumination 18.

Ainsi, la matrice 12 ou paroi 20 comprend des perçages 24 guidant l'insertion des fibres optiques 14, 18. Ces perçages permettent d'assurer l'angle que font les fibres 14, 18 avec la cellule associée 2.

Le choix d'une forme hexagonale pour les cellules 2 combine un certain nombre d'avantages :

- elle maximise la surface de mesure par rapport à la longueur des supports (ou entretoises) ;
- elle permet une très bonne répartition des forces résiduelles et collatérales (c'est-à-dire absorbées par la structure) ;
- la symétrie de l'hexagone permet de paver un plan ou une surface courbe, sans chevauchement de fibres 14 avec deux types de répartition des fibres 14 seulement (et donc deux types de cellules) comme illustré sur les figures 7 et 8.

Pour chaque cellule 2, le capteur de force 1 comprend des moyens de transformation 9, 10 agencés pour transformer des signaux optiques en provenance du système de mesure 6 de cette cellule 2 (par une sorte de « triangulation ») en un signal représentatif d'une force 11 exercée sur cette cellule 2, ce signal dépendant d'un déplacement (illustré sur la figure 6) de l'inclusion 4 enrobée au sein du matériau de remplissage 3 de cette cellule 2.

Le signal représentatif d'une force 11 exercée sur une cellule 2 comprend une intensité de cette force et une direction de cette force.

Les moyens de transformation 9, 10 comprennent le capteur optique 9. Les moyens de transformation comprennent un unique capteur optique 9 pour l'ensemble des cellules 2, ledit capteur optique 9 étant agencé pour transformer en signal électrique un signal optique en provenance de tout point de mesure optique 5 de toute cellule 2.

Les moyens de transformation comprennent en outre une unité de traitement 10. L'unité 10 comprend un ordinateur, et/ou une unité centrale ou de calcul, et/ou un circuit électronique analogique (de préférence dédié), et/ou un circuit électronique numérique (de préférence dédié), et/ou un microprocesseur (de préférence dédié), et/ou des moyens logiciels.

Les moyens de transformation 9, 10 sont agencés pour transformer des signaux optiques en provenance des au moins trois points de mesure optique d'une cellule 2 en un signal représentatif d'une force exercée sur cette cellule 2 à une fréquence d'au moins 1 Hz, typiquement autour de 60Hz.

En outre, pour au moins une cellule 2 ou pour chaque cellule 2, l'inclusion 4 enrobée dans cette cellule est de préférence fluorescente de manière à émettre un signal optique de fluorescence suite à une excitation à la longueur d'onde d'excitation émise par la source de lumière 5 (et donc les moyens de génération 23) associée à cette cellule 2 (c'est-à-dire la source agencée pour illuminer l'inclusion 4 enrobée dans cette cellule 2), le signal de fluorescence ayant une longueur d'onde de fluorescence distincte de la longueur d'onde d'excitation. Dans ce cas, les moyens de transformation 9, 10 comprennent en outre un filtre 25 (situé en amont du capteur optique 9) agencé pour filtrer (avant le capteur optique 9) la longueur d'onde d'excitation et laisser passer (jusqu'au capteur optique 9) la longueur d'onde de fluorescence. L'utilisation d'inclusions 4 fluorescentes permet d'améliorer le ratio signal sur bruit.

Le procédé de mesure de force selon l'invention mis en œuvre par le capteur 1 comprend :

- un exercice d'une force sur au moins une cellule de mesure 2, la force pouvant varier d'une cellule à l'autre (comme illustrée par les différentes flèches sur les figures 1 et 2), chaque cellule de mesure étant remplie d'un matériau de remplissage 3 dans lequel est enrobé une inclusion de matière 4,
- pour chaque cellule 2, une illumination de l'inclusion 4 enrobée dans cette cellule 2 par au moins une source de lumière 5,
- pour chaque cellule 2, une captation de lumière 8 en provenance de l'inclusion 4 enrobée dans cette cellule 2 par un système de mesure 6 comprenant au moins un point de mesure optique 7,
- pour chaque cellule 2, une transformation, par des moyens de transformation 9, 10, 25, 26, des signaux optiques en provenance du système de mesure 6 de cette cellule en un signal représentatif d'une force 11 exercée sur cette cellule 2, ce signal dépendant d'un déplacement de l'inclusion 4 enrobée au sein du matériau 3 de remplissage de cette cellule 2.

Afin de déterminer la position (et donc le déplacement) d'une inclusion 4 dans une cellule 2, une approche très similaire à de la triangulation est mis en œuvre par l'unité 10. L'intensité lumineuse reçue dans un des coins d'une cellule 2 par un point de mesure 7 dépend essentiellement de la distance de la bille 4 au coin (voir figures 4 à 6). Connaissant la distance de l'inclusion 4 à chacun des coins, il est possible de calculer sa position absolue, et ainsi la déformation du matériau 3 et donc la force appliquée sur la cellule 2. Afin de mesurer l'intensité lumineuse en trois points de chaque cellule 2, on n'utilise pas trois capteurs par cellule 2 (ce qui augmenterait le prix), mais trois fibres optiques 14 qui véhiculent la lumière 8 jusqu'au capteur optique 9 CCD ou CMOS. Il y a donc un unique capteur optique 9 pour l'ensemble des cellules 2. Un algorithme mis en œuvre par l'unité 10 permet, à partir des différences d'intensité mesurées, de reconstruire, après calibration, la force effective appliquée sur une cellule donnée 2, à un instant donné.

Nous allons maintenant décrire plus en détail cet algorithme.

Notations géométriques d'une cellule 2 considérée :

Au sein d'une cellule 2, les fibres de détection 14 sont placées aux trois extrémités d'un triangle équilatéral de côté a. Ce triangle a un cercle circonscrit confondu avec le cercle inscrit dans une cellule hexagonale de largeur a et de profondeur h.

On munit l'espace d'un repère orthonormé centré sur une fibre, dont les axes $\vec{x}$ et $\vec{y}$ sont dans le plan du triangle de base et l'axe $\vec{z}$ orienté vers la surface contenant un traceur 4.

Les fibres réceptrices (ou « de détection ») 14 correspondent par la suite dans les équations, formules et notations mathématiques suivantes à des indices 1 à 3, et ont pour coordonnées de leur extrémité respective 13, 7 :

$f_1$ : (0, 0, 0)

$f_2$ : (a, 0, 0)

$$f_3 : (\frac{a}{2}, \frac{a\sqrt{3}}{2}, 0)$$

La fibre émettrice 18 (ou « d'illumination ») est notée e, et a pour coordonnées de son extrémité 5, 17 e :

$$(\frac{a}{2}, \frac{a}{2\sqrt{3}}, 0)$$

La position du centre du traceur 4 au repos est $b_0$ :

$$(\frac{a}{2} + \epsilon_1, \frac{a}{2\sqrt{3}} + \epsilon_2, z_0 + \epsilon_3)$$

et la position courante du centre du traceur 4 est b : (x, y, z)

avec $\epsilon_i$ (i = 1 à 3) des paramètres de calibration de la fibre d'indice i et $z_0$ la distance entre le traceur et le plan ou surface 27 contenant les fibres 14.

On note $I_{m,i}(0)$ l'intensité lumineuse mesurée pour la fibre $f_i$ au repos.

On note $I_{m,i}(b)$ l'intensité lumineuse mesurée pour la fibre $f_i$ dans une position quelconque du traceur.

On note $d(f_i, b)$ la distance entre une fibre i et le traceur 4.

On note d(b, e) la distance entre la fibre émettrice 18 et le traceur 4.

On note K le module élastique de compression du matériau 3 de la cellule 2 considérée.

On note $\vec{F} = (F_x, F_y, F_z)$ la force 11 exercée sur la surface de la cellule 2.

On obtient alors :

$$\frac{l_i(b)}{l_i(b_0)} = \frac{(d(f_i, b_0) + d(b_0, e))^2}{(d(f_i, b) + d(b, e))^2}$$

$$(x_m, y_m, z_m) = Argmin(\sum_{\substack{b=(x,y,z) \\ i=1..3}} (\frac{l_i(b)}{l_i(b_0)} - \frac{I_{m,i}(b)}{I_{m,i}(0)})^2)$$

$$F_x = \frac{x_m - \left(\frac{a}{2} + \epsilon_1\right)}{a}.K$$

$$F_y = \frac{y_m - \left(\frac{a}{2.\sqrt{3}} + \epsilon_2\right)}{a}.K$$

$$F_z = \frac{z_m - (z_0 + \epsilon_3)}{h}.K$$

Ainsi, l'unité 10 calcule les trois composantes $F_x$, $F_y$, $F_z$ du vecteur $\vec{F}$ et donc :

- l'intensité totale de la force (module de $\vec{F}$), et
- la direction de $\vec{F}$ (qui est fonction des importances respectives de $F_x$, $F_y$, $F_z$).

On calibre chacune des cellules 2 du capteur 1 de force, typiquement en sortie d'usine avant commercialisation. L'unité de calcul 10 mémorise les données calibrées $\epsilon_1$, $\epsilon_2$, $\epsilon_3$, a, K personnalisées pour chaque cellule 2. De manière optionnelle, le capteur 1 de force comprend une sonde de température, et l'unité de calcul 10 mémorise les données calibrées $\epsilon_1$, $\epsilon_2$, $\epsilon_3$, a, K personnalisées pour chaque cellule et pour différentes températures possibles (par exemple tous les 0,5°C), par exemple entre 5°C et 40°C.

Avec un exemple de capteur 1 obtenu tel que précédemment décrit, on note :

- une précision de mesure de 0,85 Newton ;
- une plage de mesure de 0 à 40 Newtons.
- une erreur de mesure pour des fibres 14 légèrement mal positionnées (erreur de positionnement inférieure à cinq degrés) : inférieure à 2% ; une erreur de mesure pour des fibres 14 mal positionnées (erreur de positionnement comprise entre cinq et dix degrés) : de l'ordre de 7% ; toutefois, une mauvaise position des fibres peut le plus souvent être compensée par une calibration à cinq points de mesure 7.

On remarque qu'il est possible de changer la plage de mesure de force en changeant de matériau 3, cette plage de mesure dépendant de l'élasticité ou de la rigidité du matériau 3 choisi.

On remarque en outre que le capteur 1 comprend très peu de parties métalliques (en particulier dans le cas de la matrice 12 en PLA ou toute autre matière non ferromagnétique), mais beaucoup de parties en plastique ou verre ou polymère grâce à sa nature optique. Ainsi, le capteur 1 est très peu sensible à l'humidité et est très robuste. Il peut en outre être utilisé à proximité de forts champs magnétiques comme par exemple celui d'un IRM (chaque inclusion 4 n'étant pas ferromagnétique), notamment en déportant la diode 23 et le détecteur optique 9 par utilisation de longues fibres optiques 14, 18 (typiquement plus d'un mètre de long chacune).

Bien sûr, l'invention n'est pas limitée aux exemples qui viennent d'être décrits et de nombreux aménagements peuvent être apportés à ces exemples sans sortir du cadre de l'invention.

En particuliers, on peut envisager différentes variantes combinables aux modes de réalisation et variantes précédemment décrits en référence aux figures 1 à 9, et dans lesquelles :

- le capteur 1 peut comprendre une matrice 12 unidimensionnelle (ligne) de cellules 2, et/ou
- une ou certaines ou chacune des cellules 2 peut être une cellule « multiple » qui comprend plusieurs inclusions 4 ; une telle cellule « multiple » permet à elle seule de mesurer des forces de manière spatialement résolue. Une telle cellule multiple peut par exemple correspondre à la somme de toutes les cellules hexagonales 2 de la figure 1, 2 7 ou 9 mais pour lesquelles on supprime les parois hexagonales de manière à n'obtenir qu'une seule grosse cellule (pas nécessairement de forme plate). Une telle cellule multiple peut comprendre (avec typiquement une source 5 pour trois points de mesure 7 ou un point de mesure 7 pour trois sources 5, mais pas nécessairement):

  ◦ une (ou plus, par exemple trois ou au moins trois) source(s) 5 pour chacune de ses inclusions 4 ou une (ou plus, par exemple trois ou au moins trois) source(s) 5 commune(s) pour l'ensemble de ses inclusions 4 ou une (ou plus, par exemple trois ou au moins trois) source(s) 5 partagée(s) avec d'autres cellules 2 ; et
  ◦ un (ou plus, par exemple trois ou au moins trois) point(s) de mesure 7 pour chacune de ses inclusions 4 ou un (ou plus, par exemple trois ou au moins trois) point(s) de mesure 7 commun(s) pour l'ensemble de ses inclusions 4 (la différenciation des différentes inclusions 4 de cette cellule 2 étant réalisée en fonction de la localisation de chaque « point » de lumière sur le capteur optique 9 et/ou par des illuminations des inclusions 4 de cette cellule par une couleur spécifique à chaque inclusion) ou une (ou plus, par exemple trois ou au moins trois) point(s) de mesure 7 partagé(s) avec d'autres cellules 2 ; on a de préférence au moins un (de préférence au moins trois) point(s) de mesure optique 7 distincts par inclusion 4 enrobée au sein du matériau de remplissage 3 de cette cellule, l'au moins un (de préférence au moins trois) point(s) de mesure optique 7 associé(s) à une inclusion 4 donnée étant agencé(s) pour capter de la lumière en provenance de cette inclusion donnée 4 ; et/ou

- le capteur 1 peut comprendre une unique source 5 « partagée » qui illumine globalement et simultanément plusieurs ou toutes les cellules 2. Par exemple, cette source peut être une DEL sans fibre optique entre cette DEL et la matrice 12, et/ou
- le capteur 1 peut comprendre un ou plusieurs (par exemple trois) point(s) de mesure 7 « partagé(s) », chaque point de mesure 7 étant agencé pour capter de la lumière 8 en provenance de plusieurs ou de l'intégralité des cellules 2, la différenciation des différentes inclusions 4 des différentes cellules 2 étant réalisée en fonction de la localisation de chaque « point » de lumière sur le capteur optique 9 et/ou par des illuminations des cellules 2 par une couleur spécifique à chaque cellule 2, et/ou
- au moins une fibre d'illumination peut se subdiviser de manière à avoir plusieurs extrémités distales (mais éventuellement qu'une seule extrémité proximale), et/ou
- on peut avoir un capteur 9 distinct par fibre de détection 14, et/ou
- on peut avoir un moyen de génération 23 distinct par fibre d'illumination 18, et/ou
- le matériau de remplissage 3 peut être différent entre différentes cellules 2 ; cela peut notamment être utile pour un capteur 1 pour lequel on sait que les intensités de force ne vont pas être uniformément réparties sur le capteur 1, et permet donc d'ajuster le module K et donc la gamme de mesure de force entre différentes zones ou cellules 2 du capteur 1, et/ou
- chaque cellule 2 peut comprendre moins de trois points de mesure 7. Par exemple, trois sources lumineuses 5 (par cellule 2 ou partagées pour toutes les cellules 2) colorées et un point de mesure 7 (par cellule 2 ou partagé pour toutes les cellules 2) permettrait en théorie la triangulation ; et/ou
- pour chaque cellule 2, la ou les extrémité(s) ou point(s) de mesure 7,13 ne sont pas nécessairement dans le même plan 27 que la ou les source(s) ou extrémité(s) 5, 17.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres.


## Revendications

1.  Capteur (1) de force, comprenant:

    - une paroi (20) comprenant une matrice de cellules de mesure (2), chaque cellule de mesure étant remplie d'un matériau de remplissage (3) dans lequel est enrobée au moins une inclusion de matière (4),
    - pour chaque cellule, au moins une source de lumière (5) agencée pour illuminer l'au moins une inclusion enrobée dans cette cellule,
    - pour chaque cellule, un système de mesure (6) comprenant au moins un point de mesure optique (7) agencé pour capter de la lumière (8) en provenance de l'au moins une inclusion enrobée dans cette cellule,
    - pour chaque cellule, des moyens (9, 10) agencés pour transformer des signaux optiques (16) en provenance du système de mesure de cette cellule en un signal représentatif d'une force (11) exercée sur cette cellule, ce signal dépendant d'un déplacement de l'au moins une inclusion enrobée au sein du matériau de remplissage de cette cellule.

2.  Capteur selon la revendication 1, **caractérisé en ce que**, pour chaque cellule (2), son système de mesure comprend au moins trois points de mesure optique distincts (7) agencés pour capter de la lumière (8) en provenance de l'au moins une inclusion (4) enrobée dans cette cellule.

3.  Capteur selon l'une quelconque des revendications précédentes, **caractérisé en ce que** la paroi (20) comprend une matrice bidimensionnelle (12) de cellules.

**4.** Capteur selon l'une quelconque des revendications précédentes, **caractérisé en ce que** le ou les points de mesure optique (7) de chaque cellule sont distincts du ou des points de mesure de chacune des autres cellules.

**5.** Capteur selon l'une quelconque des revendications précédentes, **caractérisé en ce que** chaque point de mesure optique comprend une extrémité distale (13) d'une fibre optique de détection (14).

**6.** Capteur selon la revendication 5, **caractérisé en ce que** chaque fibre optique de détection (14) comprend :

- son extrémité distale (13) orientée vers une cellule (2) à laquelle elle est associée, et
- une extrémité proximale (15) orientée vers un capteur optique (9) agencé pour transformer en signal électrique un signal optique en provenance de cette fibre optique de détection, les moyens de transformation (9, 10) comprenant ledit capteur optique (9).

**7.** Capteur selon l'une quelconque des revendications précédentes, **caractérisé en ce qu'**il comprend une source de lumière (5) distincte par cellule (2).

**8.** Capteur selon la revendication 7, **caractérisé en ce que** chaque source de lumière (5) comprend une extrémité distale (17) d'une fibre optique d'illumination (18).

**9.** Capteur selon la revendication 8, **caractérisé en ce que** chaque fibre optique d'illumination (18) comprend :

- son extrémité distale (17) orientée vers une cellule à laquelle elle est associée, et
- une extrémité proximale (19) orientée vers des moyens de génération (23) de lumière,
lesdits moyens de génération de lumière étant commun pour l'ensemble des fibres optiques d'illumination (18).

**10.** Capteur de force selon l'une quelconque des revendications 5, 6, 8 ou 9, **caractérisé en ce que** la paroi (20) comprend :

- une première face (21) agencée pour l'exercice d'une ou plusieurs force(s) mesurée(s) par le capteur de force, et
- une deuxième face (22) comprenant des passages (24) pour l'insertion de l'extrémité distale (13, 17) de chaque fibre optique de détection (14) et/ou d'illumination (18).

**11.** Capteur selon l'une quelconque des revendications précédentes, **caractérisé en ce que** le signal représentatif d'une force exercée sur une cellule comprend une intensité de cette force et/ou une direction de cette force.

**12.** Capteur selon l'une quelconque des revendications précédentes, **caractérisé en ce que** l'inclusion (4) ou au moins une des inclusions ou chacune des inclusions enrobée(s) dans chaque cellule est un objet solide, de préférence une bille.

**13.** Capteur selon l'une quelconque des revendications précédentes, **caractérisé en ce que**, pour chaque cellule :

- l'au moins une inclusion (4) enrobée dans cette cellule est fluorescente de manière à émettre un signal optique de fluorescence suite à une excitation à une longueur d'onde d'excitation émise par la ou les source(s) de lumière (5) agencée(s) pour illuminer l'au moins une inclusion enrobée dans cette cellule, le signal de fluorescence ayant une longueur d'onde de fluorescence distincte de la longueur d'onde d'excitation,
- les moyens de transformation comprennent un filtre (25) agencé pour filtrer la longueur d'onde d'excitation et laisser passer la longueur d'onde de fluorescence.

**14.** Capteur selon l'une quelconque des revendications précédentes, **caractérisé en ce que** les moyens de transformation comprennent un unique capteur optique (9) pour l'ensemble des cellules, ledit capteur optique étant agencé pour transformer en signal électrique un signal optique en provenance de tout point de mesure optique de toute cellule (2).

**15.** Capteur selon l'une quelconque des revendications précédentes, **caractérisé en ce que** la matrice (12) est réalisée par impression 3D ou en métal.

**16.** Capteur selon l'une quelconque des revendications précédentes, **caractérisé en ce que** la matrice (12) a une forme cylindrique.

**17.** Procédé de mesure de force, comprenant :

- un exercice d'une force (11) sur une paroi (20) comprenant une matrice de cellules de mesure (2), la force pouvant varier d'une cellule à l'autre, chaque cellule de mesure étant remplie d'un matériau de remplissage (3) dans lequel est enrobée au moins une inclusion de matière (4),
- pour chaque cellule, une illumination de l'au moins une inclusion enrobée dans cette cellule par au moins une source de lumière (5),
- pour chaque cellule, une captation de lumière (8) en provenance de l'au moins une inclusion enrobée dans cette cellule par un système de mesure (6) comprenant au moins un point de mesure optique (7),
- pour chaque cellule, une transformation, par des moyens de transformation (9, 10), des signaux optiques en provenance du système de mesure de cette cellule en un signal représentatif d'une force exercée sur cette cellule, ce signal dépendant d'un déplacement de l'au moins une inclusion enrobée au sein du matériau de remplissage de cette cellule.


**Patentansprüche**

**1.** Kraftsensor (1), der Folgendes umfasst:

- eine Wand (20), die eine Messzellenmatrix (2) aufweist, wobei jede Messzelle mit einem Füllmaterial (3) gefüllt ist, in dem mindestens ein Materialeinschluss (4) eingebettet ist,
- für jede Zelle mindestens eine Lichtquelle (5), die dazu eingerichtet ist, um den mindestens einen eingebetteten Einschluss in dieser Zelle zu beleuchten,
- für jede Zelle ein Messsystem (6) mit mindestens einem optischen Messpunkt (7), der dazu eingerichtet ist, Licht (8) einzufangen, das von dem mindestens einen in dieser Zelle eingebetteten Einschluss kommt,
- für jede Zelle Mittel (9, 10), die dazu eingerichtet sind, um vom Messsystem dieser Zelle kommende optische Signale (16) in ein Signal umzuwandeln, das für eine auf diese Zelle ausgeübte Kraft (11) repräsentativ ist, wobei dieses Signal von einer Verschiebung des mindestens einen, innerhalb des Füllmaterials dieser Zelle eingebetteten Einschlusses abhängt.

**2.** Sensor nach Anspruch 1, **dadurch gekennzeichnet, dass** sein Messsystem für jede Zelle (2) mindestens drei separate optische Messpunkte (7) umfasst, die dazu eingerichtet sind, um Licht (8) von dem mindestens einen in dieser Zelle eingebetteten Einschluss (4) zu erfassen.

**3.** Sensor nach einem der vorhergehenden Ansprüche, **dadurch gekennzeichnet, dass** die Wand (20) eine zweidimensionale Matrix (12) von Zellen umfasst.

**4.** Sensor nach einem der vorhergehenden Ansprüche, **dadurch gekennzeichnet, dass** der Punkt oder die Punkte der optischen Messung (7) jeder Zelle sich von dem Messpunkt oder den Messpunkten jeder der anderen Zellen unterscheidet oder unterscheiden.

**5.** Sensor nach einem der vorhergehenden Ansprüche, **dadurch gekennzeichnet, dass** jeder Punkt der optischen Messung ein distales Ende (13) einer optischen Erkennungsfaser (14) umfasst.

**6.** Sensor nach Anspruch 5, **dadurch gekennzeichnet, dass** jede optische Erkennungsfaser (14) Folgendes umfasst:

- ein distales Ende (13), das auf eine Zelle (2) ausgerichtet ist, mit der es verbunden ist, und
- ein proximales Ende (15), das auf einen optischen Sensor (9) ausgerichtet ist, der dazu eingerichtet ist, um ein optisches Signal von dieser optischen Erkennungsfaser in ein elektrisches Signal umzuwandeln, wobei die Umwandlungsmittel (9, 10) den optischen Sensor (9) umfassen.

**7.** Sensor nach einem der vorhergehenden Ansprüche, **dadurch gekennzeichnet, dass** sie für jede Zelle (2) eine eigene Lichtquelle (5) umfassen.

**8.** Sensor nach Anspruch 7, **dadurch gekennzeichnet, dass** jede Lichtquelle (5) ein distales Ende (17) einer optischen Beleuchtungsfaser (18) umfasst.

**9.** Sensor nach Anspruch 8, **dadurch gekennzeichnet, dass** jede optische Beleuchtungsfaser (18) Folgendes umfasst:

- ein distales Ende (17), das auf eine Zelle ausgerichtet ist, mit der es verbunden ist, und
- ein proximales Ende (19), das auf Lichterzeugungsmittel (23) ausgerichtet ist, wobei die Lichterzeugungsmittel für alle optischen Beleuchtungsfasern (18) gemeinsam vorgesehen sind.

**10.** Kraftsensor nach einem der Ansprüche 5, 6, 8 oder 9, **dadurch gekennzeichnet, dass** die Wand (20) Folgendes umfasst:

- eine erste Fläche (21), die dazu eingerichtet ist, um eine Kraft oder mehrere Kräfte, die von dem Kraftsensor gemessen wird oder werden, auszuüben, und
- eine zweite Fläche (22) mit Durchgängen (24) zum Einführen des distalen Endes (13, 17) jeder optischen Erkennungsfaser (14) und/oder Beleuchtungsfaser (18).

**11.** Sensor nach einem der vorhergehenden Ansprüche, **dadurch gekennzeichnet, dass** das Signal, das für eine auf eine Zelle ausgeübte Kraft repräsentativ ist, eine Größe dieser Kraft und/oder eine Richtung dieser Kraft umfasst.

**12.** Sensor nach einem der vorhergehenden Ansprüche, **dadurch gekennzeichnet, dass** der Einschluss (4) oder zumindest einer der Einschlüsse oder jeder der Einschlüsse, der (die) in jeder Zelle eingebettet ist (sind), ein fester Gegenstand, vorzugsweise eine Kugel ist (sind).

**13.** Sensor nach einem der vorhergehenden Ansprüche, **dadurch gekennzeichnet, dass** für jede Zelle:

- der mindestens eine Einschluss (4), der in dieser Zelle eingebettet ist, fluoreszierend ist, um ein optisches Fluoreszenzsignal nach einer Anregung bei einer Anregungswellenlänge auszugeben, das von der Lichtquelle (den Lichtquellen) (5) ausgegeben wird, die dazu eingerichtet ist (sind), um den mindestens einen in dieser Zelle eingebetteten Einschluss zu beleuchten, wobei das Fluoreszenzsignal eine von der Anregungswellenlänge verschiedene Fluoreszenzwellenlänge aufweist,
- die Umwandlungsmittel ein Filter (25) umfassen, das dazu eingerichtet ist, um die Anregungswellenlänge zu filtern und die Fluoreszenzwellenlänge passieren zu lassen.

**14.** Sensor nach einem der vorhergehenden Ansprüche, **dadurch gekennzeichnet, dass** die Umwandlungsmittel einen einzigen optischen Sensor (9) für die gesamten Zellen umfassen, wobei der optische Sensor dazu eingerichtet ist, um ein optisches Signal von einem beliebigen optischen Messpunkt einer beliebigen Zelle (2) in ein elektrisches Signal umzuwandeln.

**15.** Sensor nach einem der vorhergehenden Ansprüche, **dadurch gekennzeichnet, dass** die Matrix (12) durch 3D-Druck oder aus Metall hergestellt ist.

**16.** Sensor nach einem der vorhergehenden Ansprüche, **dadurch gekennzeichnet, dass** die Matrix (12) eine Zylinderform aufweist.

**17.** Kraftmessverfahren, umfassend:

- Ausüben einer Kraft (11) auf eine Wand (20), umfassend eine Matrix von Messzellen (2), wobei die Kraft von einer Zelle zur anderen variieren kann, wobei jede Messzelle mit einem Füllmaterial (3) gefüllt ist, in das mindestens ein Materialeinschluss (4) eingebettet ist,
- für jede Zelle Beleuchten des mindestens einen Einschlusses, der in dieser Zelle eingebettet ist, mit mindestens einer Lichtquelle (5),
- für jede Zelle eine Lichtaufnahme (8), die von dem mindestens einen Einschluss stammt, der in dieser Zelle eingebettet ist, durch ein Messsystem (6), das mindestens einen optischen Messpunkt (7) umfasst,
- für jede Zelle eine Umwandlung, durch Umwandlungsmittel (9, 10), der vom Meßsystem dieser Zelle kommenden optischen Signale in ein Signal, das für eine auf diese Zelle ausgeübte Kraft repräsentativ ist, wobei dieses Signal von einer Verschiebung des mindestens einen Einschlusses, der in dem Füllmaterial dieser Zelle eingebettet ist, abhängt.

**EP 3 335 021 B1**

Claims

1. Force sensor (1), comprising:

   - a wall (20) comprising an array of measurement cells (2), each measurement cell being filled with a filling material (3) in which at least one inclusion of a substance (4) is embedded,
   - for each cell, at least one light source (5) arranged in order to illuminate the at least one inclusion embedded in this cell,
   - for each cell, a measurement system (6) comprising at least one optical measurement point (7) arranged in order to capture light (8) originating from the at least one inclusion embedded in this cell,
   - for each cell, means (9, 10) arranged in order to convert optical signals (16) originating from the measurement system of this cell to a signal representative of a force (11) exerted on this cell, this signal being dependent on a movement of the at least one inclusion embedded within the filling material of this cell.

2. Sensor according to claim 1, **characterized in that**, for each cell (2), its measurement system comprises at least three distinct optical measurement points (7) arranged in order to capture light (8) originating from the at least one inclusion (4) embedded in this cell,

3. Sensor according to any one of the preceding claims, **characterized in that** the wall (20) comprises a two-dimensional array (12) of cells.

4. Sensor according to any one of the preceding claims, **characterized in that** the optical measurement point or points (7) of each cell are distinct from the measurement point or points of each of the other cells.

5. Sensor according to any one of the preceding claims, **characterized in that** each optical measurement point comprises a distal end (13) of a detection optical fibre (14).

6. Sensor according to claim 5, **characterized in that** each detection optical fibre (14) comprises:

   - its distal end (13) oriented towards a cell (2) with which it is associated, and
   - a proximal end (15) oriented towards an optical sensor (9) arranged in order to convert an optical signal originating from this detection optical fibre to an electrical signal, the conversion means (9, 10) comprising said optical sensor (9).

7. Sensor according to any one of the preceding claims, **characterized in that** it comprises a distinct light source (5) per cell (2).

8. Sensor according to claim 7, **characterized in that** each light source (5) comprises a distal end (17) of an illumination optical fibre (18).

9. Sensor according to claim 8, **characterized in that** each illumination optical fibre (18) comprises:

   - its distal end (17) oriented towards a cell with which it is associated, and
   - a proximal end (19) orientated towards light generation means (23), said light generation means being common to all of the illumination optical fibres (18).

10. Force sensor according to any one of claims 5, 6, 8 or 9, **characterized in that** the wall (20) comprises:

    - a first face (21) arranged for the exertion of one or more force(s) measured by the force sensor, and
    - a second face 22 comprising passages (24) for the insertion of the distal end (13, 17) of each detection (14) and/or illumination (18) optical fibre.

11. Sensor according to any one of the preceding claims, **characterized in that** the signal representative of a force exerted on a cell comprises an intensity of this force and/or a direction of this force.

12. Sensor according to any one of the preceding claims, **characterized in that** the inclusion (4) or at least one of the inclusions or each of the inclusions embedded in each cell is a solid object, preferably a bead.

**13.** Sensor according to any one of the preceding claims, **characterized in that**, for each cell:

- the at least one inclusion (4) embedded in this cell is fluorescent so as to emit an optical fluorescence signal following excitation with an excitation wavelength emitted by the light source(s) (5) arranged in order to illuminate the at least one inclusion embedded in this cell, the fluorescence signal having a fluorescence wavelength distinct from the excitation wavelength,
- the conversion means comprise a filter (25) arranged in order to filter out the excitation wavelength and allow the fluorescence wavelength to pass through.

**14.** Sensor according to any one of the preceding claims, **characterized in that** the conversion means comprise a single optical sensor (9) for all of the cells, said optical sensor being arranged in order to convert an optical signal originating from any optical measurement point of any cell (2) to an electrical signal.

**15.** Sensor according to any one of the preceding claims, **characterized in that** the array (12) is produced by 3D printing or from metal.

**16.** Sensor according to any one of the preceding claims, **characterized in that** the array (12) is cylindrical in form.

**17.** Method for the measurement of force, comprising:

- exertion of a force (11) on a wall (20) comprising an array of measurement cells (2), the force being able to vary from one cell to another, each measurement cell being filled with a filling material (3) in which at least one inclusion of a substance (4) is embedded,
- for each cell, illumination of the at least one inclusion embedded in this cell by at least one light source (5),
- for each cell, capture of light (8) originating from the at least one inclusion embedded in this cell, by means of a measurement system (6) comprising at least one optical measurement point (7),
- for each cell, conversion, by conversion means (9, 10) of the optical signals originating from the measurement system of this cell to a signal representative of a force exerted on this cell, this signal being dependent on a movement of the at least one inclusion embedded within the filling material of this cell.

FIG. 1

FIG. 2

FIG. 3

FIG. 4

FIG. 5

FIG. 6

EP 3 335 021 B1

FIG. 8

FIG. 7

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005029028 A1
- EP 1757917 A1
- EP 1321753 A1
- US 2014182391 A
- JP H09257609 A
- WO 9202796 A1

**Littérature non-brevet citée dans la description**

- **I D JOHNSTON ; D K MCCLUSKEY ; C K L TAN ; M C TRACEY.** Mechanical characterization of bulk Sylgard184 for microfluidics and microengineering. *Journal of Micromechanics and Microengineering,* 2014